# FASCICULE DE BREVET EUROPEEN

(11) **EP 2 800 916 B1**
(45) Date de publication et mention de la délivrance du brevet: **06.04.2016**
(21) Numéro de dépôt: 12813036.6
(22) Date de dépôt: 26.12.2012
(51) Int. Cl.: F16J 15/00, F16J 15/16, F16J 15/34, F04D 15/00, F04D 29/10, F04D 1/00, F04D 7/08, F04D 29/12, F04D 29/14, G21C 15/243

(54) **DISPOSITIF D'ETANCHEITE A L'ARRET PASSIF POUR SYSTEME DE JOINTS D'ARBRE D'UN GROUPE MOTOPOMPE PRIMAIRE**
ABDICHTUNGSVORRICHTUNG MIT PASSIVER ABSCHALTUNG FÜR EIN SYSTEM AUS WELLENDICHTUNGEN EINER PRIMÄREN MOTORISIERTEN PUMPENEINHEIT
PASSIVE SHUTDOWN SEALING DEVICE FOR A SYSTEM OF SHAFT SEALS OF A PRIMARY MOTORIZED PUMP UNIT

(30) Priorité: 04.01.2012 FR 1250087
(43) Date de publication de la demande: 12.11.2014
(73) Titulaire: AREVA NP, 92400 Courbevoie (FR)
(72) Inventeur: SAVIN, Eric, F-71100 Chalon Sur Saone (FR)
(74) Mandataire: Lebkiri, Alexandre
(86) Numéro de dépôt international: PCT/EP2012/076912
(87) Numéro de publication internationale: WO 2013/102599

(56) Documents cités:
- EP-A2- 0 343 409
- DE-A1- 3 804 183
- US-A1- 2003 057 655
- US-A1- 2007 140 877

## Description

### DOMAINE TECHNIQUE

Le domaine de l'invention est celui des groupes motopompes primaires de réacteurs nucléaires à eau sous pression (REP).

L'invention concerne plus un dispositif d'étanchéité à l'arrêt (DEA) passif permettant de contrôler une fuite de fluide de refroidissement primaire résultant de la défaillance du système de joints présent sur le groupe motopompe primaire.

### ETAT DE LA TECHNIQUE

Les dispositifs d'étanchéité à l'arrêt (DEA) ont été développés dans les réacteurs nucléaires à eau sous pression de nouvelles générations pour faire face une défaillance du système de joints du groupe motopompe primaire suite à une situation accidentelle, dite SBO (pour Station Black Out en langue anglaise).

Ainsi, les dispositifs d'étanchéité à l'arrêt doivent, dans cette situation accidentelle et après l'arrêt de la pompe primaire, permettre de contrôler et de stopper une fuite du fluide de refroidissement primaire résultant de la défaillance du système de joints du groupe motopompe primaire.

Classiquement, ce type de dispositif est activé par une source auxiliaire (telle que par exemple un circuit d'azote sous pression) et le déclenchement est piloté par une information délivrée par le contrôle commande du réacteur, en cas de perte des sources de refroidissement du groupe motopompe primaire.

Dans le but de d'affranchir de l'utilisation d'une source d'activation, il a été développé un dispositif d'étanchéité à l'arrêt passif ne nécessitant aucun système auxiliaire d'activation, ni d'élaboration d'une information de déclenchement au niveau du contrôle commande du réacteur. Un tel dispositif d'étanchéité à l'arrêt passif est décrit dans le document WO 2010/068615. Par ailleurs, le document US 2007/140877 A1 montre un dispositif d'étanchéité à l'arrêt passif pour système de joints d'arbre de groupe motopompe primaire comportant au moins un actuateur thermique adapté pour changer de forme à partir d'un seuil de température, ledit actuateur thermique présentant une première position, dite position froide, lorsque la température de l'actuateur thermique est inférieure au dit seuil de température, et une deuxième position, dite position chaude, lorsque la température de l'actuateur thermique est supérieure au dit seuil de température, le dispositif comportant aussi un anneau d'étanchéité présentant une position activée lorsque ledit au moins un actuateur thermique est dans sa position chaude et présentant une position inactivée lorsque ledit au moins un actuateur thermique est dans sa position froide.

### EXPOSE DE L'INVENTION

Dans ce contexte l'invention vise à proposer une amélioration d'un tel dispositif d'étanchéité permettant de garantir l'activation du dispositif d'étanchéité ainsi que son bon fonctionnement lors d'une situation accidentelle.

A cette fin l'invention propose un dispositif d'étanchéité à l'arrêt passif pour système de joints d'arbre de groupe motopompe primaire comportant au moins un bilame thermique adapté pour changer de forme à partir d'un seuil de température ; ledit bilame thermique présentant une première position, dite position froide, lorsque la température dudit bilame est inférieure au dit seuil de température, et une deuxième position, dite position chaude, lorsque la température dudit bilame est supérieure au dit seuil de température ;
ledit dispositif étant caractérisé en ce qu'il comporte :
- un anneau d'étanchéité présentant une position activée lorsque ledit au moins un bilame thermique est dans sa position chaude et présentant une position inactivée lorsque ledit au moins un bilame thermique est dans sa position froide ;
- des moyens de verrouillage/déverrouillage solidaires dudit au moins un bilame thermique et adaptés pour verrouiller ledit anneau d'étanchéité dans sa position inactivée lorsque ledit au moins un bilame thermique est dans sa position froide et pour libérer ledit anneau d'étanchéité lorsque ledit au moins un bilame thermique est dans sa position chaude ;
- des moyens élastiques adaptés pour contraindre ledit anneau d'étanchéité dans la position activée lorsque lesdits moyens de verrouillage/déverrouillage sont déverrouillés.

Grâce à l'invention, il est possible de stopper une fuite du fluide de refroidissement primaire résultant de la défaillance du système de joints du groupe motopompe primaire sans nécessité d'une source auxiliaire d'activation.

La conception du dispositif selon l'invention permet une implantation simplifiée sur les architectures des groupes motopompes primaires déjà en service.

Grâce au dispositif selon l'invention, il est également possible d'ajuster le dispositif aux contraintes de fonctionnement de chaque type de réacteur nucléaire par le réglage de la température d'auto-activation du dispositif, et plus précisément par la modification du seuil de température de changement de forme du bilame thermique.

Le dispositif d'étanchéité à l'arrêt passif selon l'invention peut également présenter une ou plusieurs des caractéristiques ci-dessous prises individuellement ou selon toutes les combinaisons techniquement possibles :
- ledit dispositif est adapté pour être intégré sur un système de joints d'un arbre de groupe motopompe primaire en service ;
- ledit anneau comporte un épaulement adapté pour coopérer avec lesdits moyens de verrouillage/déverrouillage ;
- ledit au moins un bilame thermique est adapté pour changer de forme à partir d'un seuil de température compris entre 80°C et 200°C, avantageusement égal à 150°C ;
- ledit anneau d'étanchéité est réalisé dans un matériau polymère résistant à des températures supérieures à 300 °C ;
- ledit anneau d'étanchéité est réalisé en PEEK ;
- ledit anneau d'étanchéité est réalisé en un composite à matrice PEEK chargé fibre de verre ou de carbone ;
- ledit anneau d'étanchéité est réalisé dans un matériau métallique ;
- ledit anneau d'étanchéité est un matériau composite formé par un noyau métallique et revêtu par un matériau plus malléable que ledit noyau métallique ;
- ledit matériau plus malléable que ledit noyau métallique est un polymère ou du nickel ou de l'argent ;
- lesdits moyens élastiques sont des ressorts de compression ;
- le dispositif comporte une pluralité de bilames thermiques et une pluralité de moyens de verrouillage/déverrouillage répartis sur le pourtour dudit anneau ; lesdits bilames thermiques et lesdits moyens de verrouillage/déverrouillage étant écartés angulairement les uns des autres d'un angle constant ;
- ledit dispositif comporte trois bilames thermiques et trois moyens de verrouillage/déverrouillage.

L'invention a également pour objet un groupe motopompe primaire comportant :
- un système de joints adapté pour réaliser une fuite contrôlée s'établissant le long d'un chemin de fuite agencé le long de l'arbre pompe pompe du groupe motopompe primaire ;
- un dispositif d'étanchéité à l'arrêt passif selon l'invention adapté pour obturer au moins partiellement ledit chemin de fuite dudit système de joints lorsque ledit système de joint est défaillant et lorsque ledit anneau d'étanchéité est activé, de manière à réaliser une fuite contrôlée.

### BREVES DESCRIPTION DES FIGURES

D'autres caractéristiques et avantages de l'invention ressortiront plus clairement de la description qui en est donnée ci-dessous, à titre indicatif et nullement limitatif, en référence aux figures annexées, parmi lesquelles :
- la figure 1 illustre un premier mode de réalisation d'un dispositif d'étanchéité d'arrêt passif selon l'invention intégré dans un système de joints d'un groupe motopompe primaire ;
- les figures 2a et 2b illustrent le comportement du dispositif d'étanchéité d'arrêt passif illustré à la figure 1 en fonction de la température ;
- la figure 3 illustre un deuxième mode de réalisation d'un dispositif d'étanchéité d'arrêt passif selon l'invention intégré dans un système de joints d'un groupe motopompe primaire :
- les figures 4a et 4b illustrant le comportement du dispositif d'étanchéité à l'arrêt illustré à la figure 3 en fonction de la température.

Pour plus de clarté, les éléments identiques ou similaires sont repérés par des signes de références identiques sur l'ensemble des figures.

### DESCRIPTION DETAILLEE D'AU MOINS UN MODE DE REALISATION

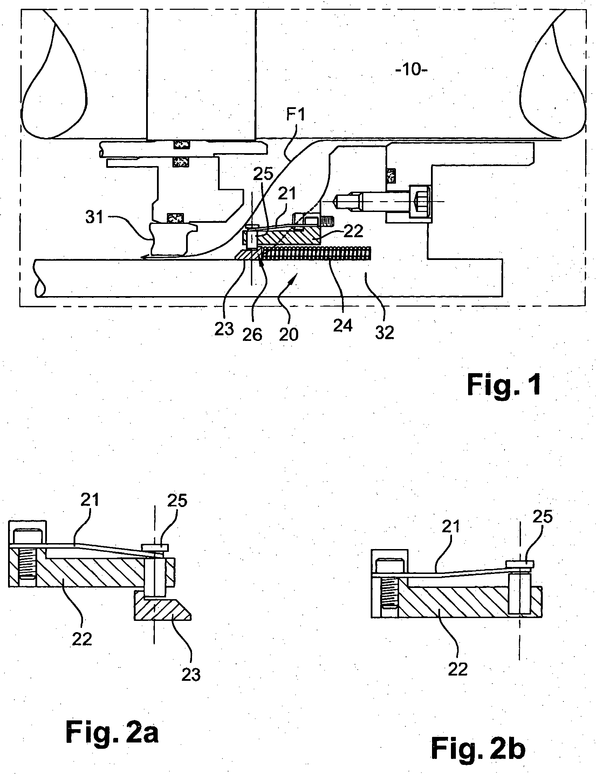

Les pompes primaires des réacteurs à eau sous pression sont de type centrifuge à axe vertical. L'étanchéité dynamique en sortie d'arbre 10 (figure 1) est assurée par un système de joints constitué de trois étages.

Le premier étage est baptisé joint n°1. Le joint n°1 (non représenté) est un joint hydrostatique à fuite contrôlée. En fonctionnement normal, un débit de fuite, illustré par la flèche F1, s'établit le long de l'arbre 10.

En situation accidentelle, la température du fluide en entrée du joint n°1 subit une élévation rapide de température pour atteindre une valeur proche de la température du circuit primaire, soit environ 280°C. A cette température, les performances du joint n°1 sont dégradées ce qui entraine une augmentation très importante de débit de fuite qui peut dépasser 10 m³ par heure. Les dispositifs d'étanchéité à l'arrêt (DEA) passif sont destinés dans cette situation accidentelle à bloquer le chemin de fuite F1 en aval du joint n°1.

La figure 1 représente un premier mode de réalisation d'un dispositif d'étanchéité d'arrêt passif selon l'invention intégré dans un système de joints d'un groupe motopompe primaire. Le dispositif DEA illustré à la figure 1 est illustré en conditions normales de fonctionnement. Les figures 2a et 2b illustrent une vue en coupe de deux états du dispositif d'étanchéité selon l'invention.

La figure 2a illustre plus particulièrement le dispositif d'étanchéité lors des conditions normales de fonctionnement du groupe motopompe primaire, c'est-à-dire lorsque la température du dispositif est inférieure à une valeur seuil.

La figure 2b illustre plus particulièrement le dispositif d'étanchéité lors des situations accidentelles de fonctionnement du groupe motopompe primaire, c'est-à-dire lorsque la température du dispositif est supérieure à une valeur seuil.

Le dispositif d'étanchéité à l'arrêt 20 selon l'invention comporte :
- une pluralité de bilames thermiques 21 (un seul étant représenté) adaptés pour changer de forme à partir d'un seuil de température prédéterminé ;
- un support 22 permettant de solidariser le dispositif 20 sur le groupe motopompe primaire, et plus particulièrement sur le support de l'équipage flottant 32 du joint n°1 ;
- un anneau d'étanchéité 23 positionné concentriquement par rapport à arbre pompe 10 du groupe motopompe primaire ;
- des moyens élastiques 24, tels que des ressorts de compression, adaptés pour déplacer axialement l'anneau d'étanchéité ainsi que pour le contraindre sur la glace tournante 31 du joint n °2 ;
- des moyens de verrouillage/déverrouillage 25 permettant de verrouiller ou de déverrouiller la position inactive de l'anneau d'étanchéité 23.

Dans le premier mode de réalisation illustré par les figures 1, 2a et 2b, les bilames thermiques 21 ont la forme d'une fourchette solidarisée au niveau de l'une de ses extrémités sur le support 22 par des moyens de vissage.

Au niveau de son extrémité libre, le bilame thermique 21 est solidaire des moyens de verrouillage/déverrouillage 25. Les moyens de verrouillage/déverrouillage 25 sont avantageusement des goupilles.

Le support 22 comporte des alésages débouchants dans lesquels les goupilles 25 sont insérées et débouchent de part et d'autre du support 22 de manière à pouvoir coopérer avec l'anneau d'étanchéité 23. Les goupilles 25 sont montées coulissantes à l'intérieur des alésages de manière à pouvoir permettre leur déplacement axial lorsque les bilames thermiques 21 changent de forme lors de l'augmentation de température du débit de fuite.

Selon un mode préférentiel de l'invention, le dispositif comporte trois bilames thermiques 21 réparties à 120° sur la circonférence de l'arbre pompe 10 du groupe motopompe primaire.

En conditions normales de fonctionnement (figure 1 et 2a), le bilame thermique 21 est dans sa position froide, la température du débit de fuite étant inférieur à la température du seuil de changement de forme.

Dans ces conditions, l'anneau d'étanchéité 23 est verrouillé dans une position inactive, tel qu'illustré par figure 1 ou la figure 2a, par la coopération d'un épaulement 26 situé sur la partie périphérique intérieur de l'anneau et des goupilles 25 et par la mise en tension de l'anneau 23 sur la goupille 25 par la mise en compression des moyens élastiques.

En conditions accidentelles (figure 2b), l'augmentation de la température du débit de fuite a pour effet d'augmenter la température du bilame thermique 21 qui change alors de forme lorsque le bilame atteint sa température seuil de changement de forme. Ainsi, dans cette situation le bilame thermique « cloque ». Le cloquage du bilame thermique 21 modifie la position de la goupille 25, solidaire du bilame thermique 21, de manière à la faire coulisser dans l'alésage du support 22 et à la désengager de l'épaulement 26 de l'anneau d'étanchéité 23. L'anneau d'étanchéité 23 n'étant plus contraint axialement par les goupilles 25, les moyens élastiques 24 entraînent l'anneau 23 jusqu'au contact de la glace tournante 31 de joint n°2, assurant ainsi le blocage du chemin de fuite symbolisé par la flèche référencée F1. L'anneau d'étanchéité 23 est guidé axialement par son diamètre extérieur à l'intérieur de l'alésage de la pièce 32 support de l'équipage flottant du joint n°1.

Le blocage de l'anneau d'étanchéité 23 en position activée, c'est-à-dire au contact de la glace tournante 31, est assuré dans un premier temps par les moyens élastiques 24 puis également par l'effet autoclave induit par l'augmentation de la pression en amont du dispositif 20.

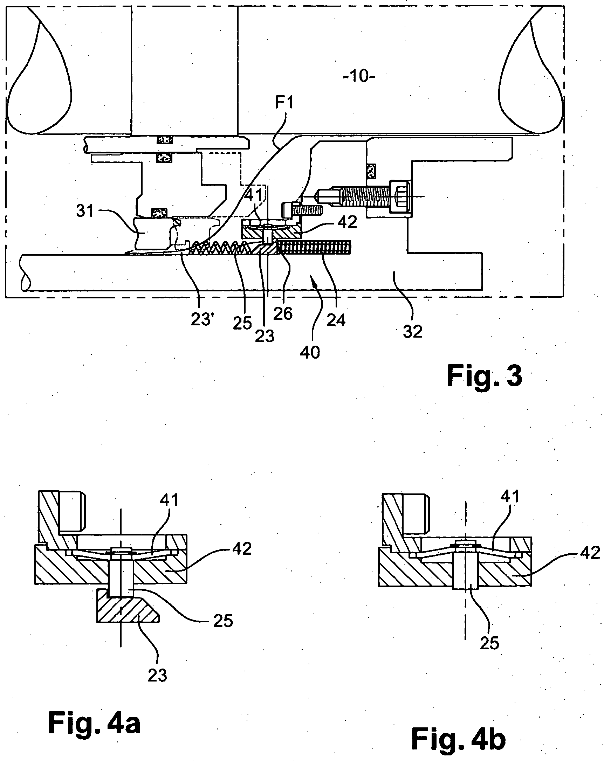

La figure 3 représente un deuxième mode de réalisation d'un dispositif d'étanchéité d'arrêt passif selon l'invention intégré dans un système de joints d'un groupe motopompe primaire. Le dispositif DEA illustré à la figure 3 est illustré en conditions normales de fonctionnement, ainsi que la position du moyen d'étanchéité 23' en conditions accidentelles. Les figures 4a et 4b illustrent une vue en coupe de deux états du dispositif d'étanchéité selon le deuxième mode de réalisation illustré à la figure 3.

La figure 4à illustre plus particulièrement le deuxième mode de réalisation du dispositif d'étanchéité lors des conditions normales de fonctionnement du groupe motopompe primaire, c'est-à-dire lorsque la température du dispositif est inférieure à une valeur seuil.

La figure 4b illustre plus particulièrement le deuxième mode de réalisation du dispositif d'étanchéité lors des situations accidentelles de fonctionnement du groupe motopompe primaire, c'est-à-dire lorsque la température du dispositif est supérieure à une valeur seuil.

Le dispositif d'étanchéité à l'arrêt 40 comporte:
- une pluralité de bilames thermiques 41 adaptés pour changer de forme à partir d'un seuil de température prédéterminé ;
- un support 42 permettant de solidariser le dispositif sur le groupe motopompe primaire, et plus précisément sur le support de l'équipage flottant 32 du joint n°1 ;
- un anneau d'étanchéité 23 ;
- des moyens élastiques 24, tels que des ressorts de compression adaptés pour déplacer axialement l'anneau d'étanchéité ainsi que pour le contraindre sur la glace tournante 31 du joint n °2 ;
- des moyens de verrouillage/déverrouillage 25 permettant de verrouiller ou de déverrouiller la position inactive de l'anneau d'étanchéité 23.

Dans ce deuxième mode de réalisation le bilame thermique 41 a la forme d'un disque bloqué au niveau de son diamètre extérieur par le support 42.

Le bilame thermique en forme de disque comporte un perçage en son centre apte à recevoir de façon solidaire les moyens de verrouillage/déverrouillage 25.

Le support 42 comporte des alésages débouchant dans lesquels les moyens de verrouillage/déverrouillage 25 sont insérés et débouchent de part et d'autre du support 42 de manière à pouvoir coopérer avec l'anneau d'étanchéité 23.

De façon similaire au mode de réalisation décrit précédemment, les moyens de verrouillage/déverrouillage 25 sont montés coulissant à l'intérieur des alésages de manière à pouvoir permettre leur déplacement axial lorsque les bilames thermiques 41 changent de forme lors de l'augmentation de température du débit de fuite.

En conditions normales de fonctionnement (figure 3 et 4a), le bilame thermique 41 est dans sa position froide, la température du débit de fuite étant inférieure à la température du seuil de changement de forme.

Dans ces conditions, l'anneau d'étanchéité 23 est verrouillé dans une position inactive par la coopération d'un épaulement 26 situé sur la partie périphérique intérieure de l'anneau et des moyens de verrouillage/déverrouillage 25. Ainsi dans cette situation de repos, i.e. en fonctionnement normal, l'anneau d'étanchéité 23 est maintenu verrouillé dans cette position et les moyens élastiques 24 sont comprimés.

En conditions accidentelles (figure 4b), l'augmentation de la température du débit de fuite a pour effet d'augmenter la température du bilame thermique 41 qui change alors de forme lorsque le bilame atteint sa température seuil de changement de forme. Ainsi, dans cette situation le bilame thermique « cloque ». Le cloquage du bilame thermique 41 modifie la position du moyen de verrouillage/déverrouillage 25 de manière à le faire coulisser dans l'alésage du support 42 et à le désengager de l'épaulement 26 de l'anneau d'étanchéité 23. L'anneau d'étanchéité 23 n'étant plus contraint axialement par les moyens de verrouillage/déverrouillage 25, les moyens élastiques 24 comprimés exercent une force axiale sur l'anneau 23 l'entraînant jusqu'au contact de la glace tournante 31 de joint n°2, assurant ainsi le blocage du chemin de fuite symbolisé par la flèche référencée F1.

Le blocage de l'anneau d'étanchéité 23 en position activée (illustré par la référence 23' à la figure 3), c'est-à-dire au contact de la glace tournante 31, est assuré par les moyens élastiques 24 ainsi que par l'effet autoclave induit par l'augmentation de la pression en amont du dispositif 20.

Le bilame thermique 21, 41 du dispositif d'étanchéité selon l'invention est réalisé de manière à ce qu'il présente un seuil de température de cloquage compris entre 80 °C et 200°C et avantageusement égal à 150 °C.

L'anneau d'étanchéité 23 du dispositif 20 ou 40 peut être réalisé dans un matériau polymère résistant à de hautes températures (i.e. supérieures à 300°C), tel que par exemple du PEEK ou un composite PEEK chargé de fibres de verre ou de carbone. L'utilisation d'un tel matériau permet d'obtenir à haute température, un anneau d'étanchéité dans un état caoutchoutique lui permettant de se déformer pour épouser la géométrie de la glace tournante du joint n°2 et ainsi assurer une meilleure qualité d'étanchéité.

L'anneau d'étanchéité 23 du dispositif 20 ou 40 peut également être réalisé dans un matériau métallique. Dans ce cas, un débit de fuite résiduel sera attendu du fait des jeux existants entre l'anneau d'étanchéité 23 et les pièces en son contact. Toutefois, l'utilisation d'un matériau métallique permet de sécuriser la tenue du dispositif et notamment de l'anneau d'étanchéité en cas d'activation dudit dispositif avant l'arrêt complet de la rotation de l'arbre de la pompe.

L'anneau d'étanchéité 23 peut également être réalisé dans un matériau composite formé par un noyau métallique revêtu d'un matériau plus malléable que le noyau, tel que par exemple un polymère, du nickel ou encore de l'argent. Le matériau périphérique plus malléable que le noyau permettra de combler les jeux existants entre les différentes pièces par déformation de la couche superficielle. En cas d'usure de la couche superficielle provoquée par la rotation de l'arbre, le noyau métallique plus dense permet de garantir une limitation du débit de fuite.

## Revendications

1. Dispositif d'étanchéité à l'arrêt passif (20, 40) pour système de joints d'arbre de groupe motopompe primaire comportant au moins un bilame thermique (21, 41) adapté pour changer de forme à partir d'un seuil de température ; ledit bilame thermique (21, 41) présentant une première position, dite position froide, lorsque la température dudit bilame est inférieure au dit seuil de température, et une deuxième position, dite position chaude, lorsque la température dudit bilame est supérieure au dit seuil de température ;
ledit dispositif (20, 40) comportant en outre:
- un anneau d'étanchéité (23) présentant une position activée lorsque ledit au moins un bilame thermique (21, 41) est dans sa position chaude et présentant une position inactivée lorsque ledit au moins un bilame thermique est dans sa position froide ;
- des moyens de verrouillage/déverrouillage (25) solidaires dudit au moins un bilame thermique (21, 41) et adaptés pour verrouiller ledit anneau d'étanchéité (23) dans sa position inactivée lorsque ledit au moins un bilame thermique (21, 41) est dans sa position froide et pour libérer ledit anneau d'étanchéité (23) lorsque ledit au moins un bilames thermique (21, 41) est dans sa position chaude ;
- des moyens élastiques (24) adaptés pour contraindre ledit anneau d'étanchéité (23) dans la position activée lorsque lesdits moyens de verrouillage/déverrouillage (25) sont déverrouillés.

2. Dispositif d'étanchéité à l'arrêt passif (20, 40) pour système de joints d'arbre de groupe motopompe primaire selon la revendication précédente **caractérisé en ce que** ledit dispositif est adapté pour être intégré sur un système de joints d'un arbre de groupe motopompe primaire en service.

3. Dispositif d'étanchéité à l'arrêt passif (20, 40) pour système de joints d'arbre de groupe motopompe primaire selon l'une des revendications précédentes **caractérisé en ce que** ledit anneau (23) comporte un épaulement (26) adapté pour coopérer avec lesdits moyens de verrouillage/déverrouillage (25).

4. Dispositif d'étanchéité à l'arrêt passif (20, 40) pour système de joints d'arbre de groupe motopompe primaire selon l'une des revendications précédentes **caractérisé en ce que** ledit au moins un bilame thermique (21, 41) est adapté pour changer de forme à partir d'un seuil de température compris entre 80°C et 200°C, avantageusement égal à 150°C.

5. Dispositif d'étanchéité à l'arrêt passif (20, 40) pour système de joints d'arbre de groupe motopompe primaire selon l'une des revendications précédentes **caractérisé en ce que** ledit anneau d'étanchéité (23) est réalisé dans un matériau polymère résistant à des températures supérieures à 300 °C.

6. Dispositif d'étanchéité à l'arrêt passif (20, 40) pour système de joints d'arbre de groupe motopompe primaire selon la revendication précédente **caractérisé en ce que** ledit anneau d'étanchéité (23) est réalisé en PEEK.

7. Dispositif d'étanchéité à l'arrêt passif (20, 40) pour système de joints d'arbre de groupe motopompe primaire selon l'une des revendications 5 à 6 **caractérisé en ce que** ledit anneau d'étanchéité (23) est réalisé en un composite à matrice PEEK chargé fibre de verre ou de carbone.

8. Dispositif d'étanchéité à l'arrêt passif (20, 40) pour système de joints d'arbre de groupe motopompe primaire selon l'une des revendications 1 à 4 **caractérisé en ce que** ledit anneau d'étanchéité (23) est réalisé dans un matériau métallique.

9. Dispositif d'étanchéité à l'arrêt passif (20, 40) pour système de joints d'arbre de groupe motopompe primaire selon l'une des revendications 1 à 4 **caractérisé en ce que** ledit anneau d'étanchéité (23) est un matériau composite formé par un noyau métallique et revêtu par un matériau plus malléable que ledit noyau métallique.

10. Dispositif d'étanchéité à l'arrêt passif (20, 40) pour système de joints d'arbre de groupe motopompe primaire selon la revendication 9 **caractérisé en ce que** ledit matériau plus malléable que ledit noyau métallique est un polymère ou du nickel ou de l'argent.

11. Dispositif d'étanchéité à l'arrêt passif (20, 40) pour système de joints d'arbre de groupe motopompe primaire selon l'une des revendications précédentes **caractérisé en ce que** lesdits moyens élastiques sont des (24) ressorts de compression.

12. Dispositif d'étanchéité à l'arrêt passif (20, 40) pour système de joints d'arbre de groupe motopompe primaire selon l'une des revendications précédentes **caractérisé en ce qu'**il comporte une pluralité de bilames thermiques (21, 41) et une pluralité de moyens de verrouillage/déverrouillage (25) répartis sur le pourtour dudit anneau (23), lesdits bilames thermiques (21, 41) et lesdits moyens de verrouillage/déverrouillage (25) étant écartés angulairement les uns des autres d'un angle constant.

13. Dispositif d'étanchéité à l'arrêt passif (20, 40) pour système de joints d'arbre de groupe motopompe primaire selon l'une des revendications précédentes **caractérisé en ce qu'**il comporte trois bilames thermiques et trois moyens de verrouillage/déverrouillage (25).

14. Groupe motopompe primaire **caractérisé en ce qu'**il comporte :
- un système de joints adapté pour réaliser une fuite contrôlée s'établissant le long d'un chemin de fuite agencé le long de l'arbre pompe du groupe motopompe primaire ;
- un dispositif d'étanchéité à l'arrêt passif selon l'une des revendications précédentes adapté pour obturer au moins partiellement ledit chemin de fuite dudit système de joints lorsque ledit système de joint est défaillant et lorsque ledit anneau d'étanchéité est activé, de manière à réaliser une fuite contrôlée.

## Patentansprüche

1. Abdichtvorrichtung mit passiver Abschaltung (20, 40) für ein Wellen-Dichtungssystem einer primären Motorpumpengruppe, umfassend wenigstens ein thermisches Bimetallelement (21, 41), das angepasst ist, um ab einer Temperaturschwelle die Form zu wechseln; wobei das genannte thermische Bimetallelement (21, 41) eine als kalte Position bezeichnete erste Position aufweist, wenn die Temperatur des genannten Bimetallelements unter der genannten Temperaturschwelle liegt, und eine als heiße Position bezeichnete zweite Position, wenn die Temperatur des genannten Bimetallelements höher ist als die genannte Temperaturschwelle;
wobei die genannte Vorrichtung (20, 40) darüber hinaus umfasst:
- einen Dichtungsring (23), der eine aktivierte Position aufweist, wenn das genannte wenigstens eine thermische Bimetall (21, 41) sich in der heißen Position befindet und eine inaktivierte Position aufweist, wenn das genannte wenigstens eine thermische Bimetall sich in der kalten Position befindet;
- Ver- / Entriegelungsmittel (25), die fest an dem genannten wenigstens einen thermischen Bimetall (21, 41) befestigt und geeignet sind, um den genannten Dichtungsring (23) in seiner inaktivierten Position zu verriegeln, wenn das genannte wenigstens eine thermische Bimetall (21, 41) sich in seiner kalten Position befindet und um den genannten Dichtungsring (23) freizugeben, wenn das genannte wenigstens eine thermische Bimetall (21, 41) sich in seiner heißen Position befindet;
- elastische Mittel (24), die geeignet sind, um den genannten Dichtungsring (23) in der aktivierten Position einzuspannen, wenn die genannten Ver- / Entriegelungsmittel (25) entriegelt sind.

2. Abdichtvorrichtung mit passiver Abschaltung (20, 40) für ein Wellendichtungssystem einer primären Motorpumpengruppe gemäß dem voranstehenden Anspruch, **dadurch gekennzeichnet, dass** die genannte Vorrichtung geeignet ist, um auf einem Dichtungssystem einer Welle einer primären Motorpumpengruppe im Betrieb eingebaut zu werden.

3. Abdichtvorrichtung mit passiver Abschaltung (20, 40) für ein Wellendichtungssystem einer primären Motorpumpengruppe gemäß einem der voranstehenden Ansprüche, **dadurch gekennzeichnet, dass** der genannte Ring (23) einen Absatz (26) umfasst, der geeignet ist, um mit den genannten Ver- / Entriegelungsmitteln (25) zusammenzuwirken.

4. Abdichtvorrichtung mit passiver Abschaltung (20, 40) für ein Wellendichtungssystem einer primären Motorpumpengruppe gemäß einem der voranstehenden Ansprüche, **dadurch gekennzeichnet, dass** das wenigstens eine thermische Bimetall (21, 41) geeignet ist, um ab einer zwischen 80° C und 200° C begriffenen Schwellentemperatur, die vorteilhaft gleich 150° C ist, die Form zu wechseln.

5. Abdichtvorrichtung mit passiver Abschaltung (20, 40) für ein Wellendichtungssystem einer primären Motorpumpengruppe gemäß einem der voranstehenden Ansprüche, **dadurch gekennzeichnet, dass** der genannte Dichtungsring (23) aus einem Polymermaterial realisiert ist, das Temperaturen von mehr als 300° C widersteht.

6. Abdichtvorrichtung mit passiver Abschaltung (20, 40) für ein Wellendichtungssystem einer primären Motorpumpengruppe gemäß dem voranstehenden Anspruch, **dadurch gekennzeichnet, dass** der genannte Dichtungsring (23) aus PEEK realisiert ist.

7. Abdichtvorrichtung mit passiver Abschaltung (20, 40) für ein Wellendichtungssystem einer primären Motorpumpengruppe gemäß Anspruch 5 bis 6, **dadurch gekennzeichnet, dass** der genannte Dichtungsring (23) aus einem Verbundstoff mit PEE-Matrix realisiert ist, die mit Glasfasern oder Kohlenstoff geladen ist.

8. Abdichtvorrichtung mit passiver Abschaltung (20, 40) für ein Wellendichtungssystem einer primären Motorpumpengruppe gemäß Anspruch 1 bis 4, **dadurch gekennzeichnet, dass** der genannte Dichtungsring (23) aus einem Metallmaterial realisiert ist.

9. Abdichtvorrichtung mit passiver Abschaltung (20, 40) für ein Wellendichtungssystem einer primären Motorpumpengruppe gemäß Anspruch 1 bis 4, **dadurch gekennzeichnet, dass** der genannte Dichtungsring (23) aus einem Verbundmaterial ist, das durch einen Metallkern gebildet und mit einem formbareren Material als der genannte Metallkern beschichtet ist.

10. Abdichtvorrichtung mit passiver Abschaltung (20, 40) für ein Wellendichtungssystem einer primären Motorpumpengruppe gemäß Anspruch 9, **dadurch gekennzeichnet, dass** das genannte Material, das formbarer ist als der genannte Metallkern, ein Polymer oder Nickel oder Silber ist.

11. Abdichtvorrichtung mit passiver Abschaltung (20, 40) für ein Wellendichtungssystem einer primären Motorpumpengruppe gemäß einem der voranstehenden Ansprüche, **dadurch gekennzeichnet, dass** die genannten elastischen Mittel Druckfedern (24) sind.

12. Abdichtvorrichtung mit passiver Abschaltung (20, 40) für ein Wellendichtungssystem einer primären Motorpumpengruppe gemäß einem der voranstehenden Ansprüche, **dadurch gekennzeichnet, dass** sie eine Vielzahl von thermischen Bimetallen (21, 41) und eine Vielzahl von Ver- / Entriegelungsmitteln (25) umfasst, die auf dem Umfang des genannten Rings (23) verteilt sind, wobei die genannten thermischen Bimetallelemente (21, 41) und die genannten Ver- / Entriegelungsmittel (25) winkelförmig voneinander in einem konstanten Winkel beabstandet sind.

13. Abdichtvorrichtung mit passiver Abschaltung (20, 40) für ein Wellendichtungssystem einer primären Motorpumpengruppe gemäß einem der voranstehenden Ansprüche, **dadurch gekennzeichnet, dass** sie drei thermische Bimetallelemente und drei Ver- / Entriegelungsmittel (25) umfasst.

14. Primäre Motorpumpengruppe, **dadurch gekennzeichnet, dass** sie umfasst:
- ein Dichtungssystem, das geeignet ist, um ein kontrolliertes Leck zu realisieren, das sich entlang eines Leckwegs ansiedelt, der entlang der Pumpenwelle der primären Motorpumpengruppe angeordnet ist;
- Abdichtungsvorrichtung mit passiver Abschaltung gemäß einem der voranstehenden Ansprüche, die geeignet ist, um wenigstens teilweise den genannten Leckweg des genannten Dichtungssystems zu verschließen, wenn das genannte Dichtungssystem ausgefallen ist und wenn der genannte Dichtungsring derart aktiviert ist, dass ein kontrolliertes Leck realisiert wird.

## Claims

1. Passive shutdown sealing device (20, 40) for a system of shaft seals for a reactor coolant pump set comprising at least one thermal bimetal strip (21, 41) designed to change shape starting from a temperature threshold; said thermal bimetal strip (21, 41) having a first position, known as the cold position, when the temperature of said bimetal strip is below said temperature threshold, and a second position, known as the hot position, when the temperature of said bimetal strip is above said temperature threshold;
said device (20, 40) further comprising:
- a sealing ring (23) having an activated position when said at least one thermal bimetal strip (21, 41) is in its hot position and having an inactivated position when said at least one thermal bimetal strip is in its cold position;
- locking/unlocking means (25) integral with said at least one thermal bimetal strip (21, 41) and designed to lock said sealing ring (23) in its inactivated position when said at least one thermal bimetal strip (21, 41) is in its cold position and to release said sealing ring (23) when said at least one thermal bimetal strip (21, 41) is in its hot position;
- elastic means (24) designed to constrain said sealing ring (23) into the active position when said locking/unlocking means (25) are unlocked.

2. Passive shutdown sealing device (20, 40) for a system of shaft seals for a reactor coolant pump set according to the previous claim **characterised in that** said device is designed to be integrated into a system of shaft seals of a reactor coolant pump set in service.

3. Passive shutdown sealing device (20, 40) for a system of shaft seals for a reactor coolant pump set according to one of the preceding claims **characterised in that** said ring (23) comprises a shoulder (26) designed to cooperate with said locking/unlocking means (25).

4. Passive shutdown sealing device (20, 40) for a system of shaft seals for a reactor coolant pump set according to one of the preceding claims **characterised in that** said at least one thermal bimetal strip (21, 41) is designed to change shape starting from a temperature threshold between 80°C and 200°C, advantageously equal to 150°C.

5. Passive shutdown sealing device (20, 40) for a system of shaft seals for a reactor coolant pump set according to one of the preceding claims **characterised in that** said sealing ring (23) is made from a polymer material that resists temperatures above 300°C.

6. Passive shutdown sealing device (20, 40) for a system of shaft seals for a reactor coolant pump set as claimed in the preceding claim **characterised in that** said sealing ring (23) is made from PEEK.

7. Passive shutdown sealing device (20, 40) for a system of shaft seals for a reactor coolant pump set according to one of claims 5 to 6 **characterised in that** said sealing ring (23) is made from a carbon or glass fibre filled PEEK matrix composite.

8. Passive shutdown sealing device (20, 40) for a system of shaft seals for a reactor coolant pump set according to one of claims 1 to 4 **characterised in that** said sealing ring (23) is made from a metal material.

9. Passive shutdown sealing device (20, 40) for a system of shaft seals for a reactor coolant pump set according to one of claims 1 to 4 **characterised in that** said sealing ring (23) is a composite material formed by a metal core and coated by a material more malleable than said metal core.

10. Passive shutdown sealing device (20, 40) for a system of shaft seals for a reactor coolant pump set according to claim 9 **characterised in that** said material more malleable than said metal core is a polymer or nickel or silver.

11. Passive shutdown sealing device (20, 40) for a system of shaft seals for a reactor coolant pump set according to one of the preceding claims **characterised in that** said elastic means are (24) compression springs.

12. Passive shutdown sealing device (20, 40) for a system of shaft seals for a reactor coolant pump set according to one of the preceding claims **characterised in that** it comprises a plurality of thermal bimetal strips (21, 41) and a plurality of locking/unlocking means (25) distributed around the edge of said ring (23), said thermal bimetal strips (21, 41) and said locking/unlocking means (25) being angularly separated from each other by a constant angle.

13. Passive shutdown sealing device (20, 40) for a system of shaft seals for a reactor coolant pump set according to one of the preceding claims **characterised in that** it comprises three thermal bimetal strips and three locking/unlocking means (25).

14. Primary motorized pump unit **characterised in that** it comprises:
- a system of seals designed to carry out a controlled leakage being established along a leakage path arranged along the pump shaft of the reactor coolant pump set;
- a passive shutdown sealing device according to one of the preceding claims designed to close off at least partially said leakage path of said system of seals when said system of seals is defective and when said sealing ring is activated, in such a way as to carry out a controlled leakage.
